(19) Europäisches Patentamt
European Patent Office
Office européen des brevets

(11) **EP 3 705 371 A1**

(12) **EUROPEAN PATENT APPLICATION**
published in accordance with Art. 153(4) EPC

(43) Date of publication:
**09.09.2020 Bulletin 2020/37**

(51) Int Cl.:
**B61L 23/00** (2006.01)       **G06T 7/00** (2017.01)
**G06T 7/593** (2017.01)

(21) Application number: **18872331.6**

(22) Date of filing: **02.11.2018**

(86) International application number:
**PCT/JP2018/040899**

(87) International publication number:
**WO 2019/088267 (09.05.2019 Gazette 2019/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.11.2017  JP 2017212847**

(71) Applicants:
• **Kabushiki Kaisha Toshiba
Minato-ku
Tokyo 105-0023 (JP)**
• **Toshiba Infrastructure Systems &
Solutions Corporation
Kawasaki-shi, Kanagawa 212-0013 (JP)**

(72) Inventors:
• **TAKAHASHI, Yusuke
Tokyo 105-0023 (JP)**
• **KOBAYASHI, Hiroyuki
Tokyo 105-0023 (JP)**
• **FUTAGAMI, Takuya
Tokyo 105-0023 (JP)**
• **KAMO, Yushi
Kawasaki-shi
Kanagawa 212-0013 (JP)**
• **TAKAHASHI, Isao
Kawasaki-shi
Kanagawa 212-0013 (JP)**
• **HATTORI, Yohei
Kawasaki-shi
Kanagawa 212-0013 (JP)**

(74) Representative: **Hoffmann Eitle
Patent- und Rechtsanwälte PartmbB
Arabellastraße 30
81925 München (DE)**

(54) **OBSTACLE DETECTING DEVICE**

(57)    An obstacle detection device according to an embodiment includes an acquiring unit, a rail detector, a monitoring region setting unit, an obstacle detector, and an output unit. The acquiring unit acquires a visible light image obtained by imaging in a traveling direction of a railway vehicle by an imaging unit included in the railway vehicle and a distance image that allows a distance to an object existing in an imaging range of the imaging unit to be identifiable. The rail detector detects, from the visible light image, a rail on which the railway vehicle travels. The monitoring region setting unit uses the rail as a standard to set, in the visible light image, a three-dimensional monitoring region defined by a loading gauge of the railway vehicle or a construction gauge. The object detector detects an obstacle that exists in the monitoring region and hinders the traveling of the railway vehicle, based on range information that allows a distance range to the monitoring region that is based on the visible light image to be identifiable and the distance image. The output unit outputs a result of detecting the obstacle.

FIG.2

**Description**

FIELD

Embodiments of the present invention relate to an obstacle detection device.

BACKGROUND

In the operation of railway vehicles such as railway trains and electric trains, it is necessary to confirm whether an obstacle exists on a route so as to secure the safety of the railway vehicles. In a section in which an obstacle is likely to exist on the route of the railway vehicles due to fall of a traveler or baggage off a station platform, stuck of a car or bicycle at a railway crossing, or the like, a station platform fence for preventing the penetration of an obstacle, a railway crossing gate for preventing the penetration of an obstacle, a station platform fall detection device such as a pressure-sensitive mat for detecting the presence of an obstacle or an image recognition device for recognizing an image of an obstacle, an obstacle detection device of an optical type, a loop coil type, or the like for detecting the presence of an obstacle at a railway crossing, or the like is installed in some cases. In addition, in the section in which the obstacle is likely to exist on the route of the railway vehicles, an emergency stop alarm button for notifying the occurrence of a train or station emergency or the like is set in some cases.

However, the foregoing equipment is installed in only sections in which an obstacle is likely to exist, in the route of railway vehicles, and it is difficult to cover the entire route of the railway vehicles. In addition, because, to detect an obstacle, ground equipment and on-vehicle equipment are required to coordinate with each other when using the foregoing equipment, there is a concern that systems are made more complex and are increased in size. Therefore, a system for detecting an obstacle exists has been developed. In the system, images in the traveling direction of a railway vehicle continuously captured by an imaging unit, mounted on the railway vehicle, is used to detect the obstacle.

CITATION LIST

Patent Literature

Patent Literature 1: Japanese Patent No. 5161673
Patent Literature 2: Japanese Patent Application Laid-open No. 2016-052849
Patent Literature 3: Japanese Patent No. 3888055
Patent Literature 4: Japanese Patent Application Laid-open No. 2016-000598

SUMMARY OF THE INVENTION

Problem to be Solved by the Invention

If an obstacle cannot be detected by a driver or the foregoing equipment before a distance between a railway vehicle and the obstacle becomes shorter than a total distance of an idling distance and a braking distance, it might be difficult to avoid a collision against the obstacle. The idling distance is a distance that the railway vehicle travels from a time the driver or the foregoing equipment recognizes the obstacle to a time braking is applied, and the braking distance is a distance that the railway vehicle travels from the time the braking is applied to a time the railway vehicle stops. In addition, compared with a car's collision avoidance system, the railway vehicle has a different feature that the railway vehicle cannot avoid an obstacle by steering due to restrictions such as a long braking distance and traveling on a rail. Therefore, the railway vehicle is requested to detect an obstacle present on a rail enough far away from the obstacle with high accuracy.

Means for Solving Problem

An obstacle detection device according to an embodiment includes an acquiring unit, a rail detector, a monitoring region setting unit, an obstacle detector, and an output unit. The acquiring unit acquires a visible light image obtained by imaging in a traveling direction of a railway vehicle by an imaging unit included in the railway vehicle and a distance image that allows a distance to an object existing in an imaging range of the imaging unit to be identifiable. The rail detector detects, from the visible light image, a rail on which the railway vehicle travels. The monitoring region setting unit uses the rail as a standard to set, in the visible light image, a three-dimensional monitoring region defined by a loading gauge of the railway vehicle or a construction gauge. The obstacle detector detects an obstacle that exists in the monitoring region and hinders the traveling of the railway vehicle, based on range information that allows a distance range to the monitoring region based on the visible light image to be identifiable and the distance image. The output unit that outputs a result of detecting the obstacle.

BRIEF DESCRIPTION OF DRAWINGS

FIG. 1 is a diagram illustrating an example of a schematic configuration of a railway vehicle according to a first embodiment.
FIG. 2 is a block diagram illustrating an example of a functional configuration of an obstacle detection device included in the railway vehicle according to the first embodiment.
FIG. 3 is a diagram illustrating an example of a monitoring region set for the railway vehicle according to the first embodiment.
FIG. 4 is a diagram illustrating an example of the monitoring region set for the railway vehicle according to the first embodiment.
FIG. 5 is a flowchart indicating an example of the flow of a process of detecting an obstacle in the railway vehicle according to the first embodiment.
FIG. 6 is a schematic diagram illustrating an example of a method for setting a monitoring region in the railway vehicle according to the first embodiment.
FIG. 7 is a diagram illustrating an example of a process of setting a standard plane for the railway vehicle according to the first embodiment.
FIG. 8 is a diagram illustrating an example of a process of setting a monitoring region for a railway vehicle according to a modification.
FIG. 9 is a diagram illustrating an example of a functional configuration of an obstacle detection device included in a railway vehicle according to a second embodiment.
FIG. 10 is a diagram illustrating an example of an enlarged monitoring region for the railway vehicle according to the second embodiment.

DETAILED DESCRIPTION

Hereinafter, a railway vehicle including an obstacle detection device according to each embodiment is described with reference to the accompanying drawings.

(First Embodiment)

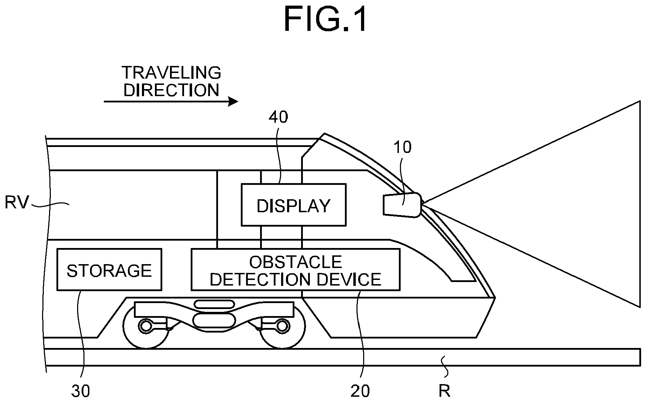

FIG. 1 is a diagram illustrating an example of a schematic configuration of a railway vehicle according to a first embodiment. As illustrated in FIG. 1, the railway vehicle RV according to the present embodiment includes a sensor 10, an obstacle detection device 20, a storage 30, and a display 40. The sensor 10 is an example of an imaging unit that can capture an image in a traveling direction of the railway vehicle RV. In the present embodiment, the sensor 10 can capture an image in an imaging range including a rail R existing in the traveling direction of the railway vehicle RV. The obstacle detection device 20 is just an example for detecting an obstacle that hinders the traveling of the railway vehicle RV. The storage 30 stores a result of detecting an obstacle by the obstacle detection device 20. The display 40 displays an image obtained by imaging in the traveling direction of the railway vehicle RV by the sensor 10 and various types of information such as a result of detecting an obstacle by the obstacle detection device 20.

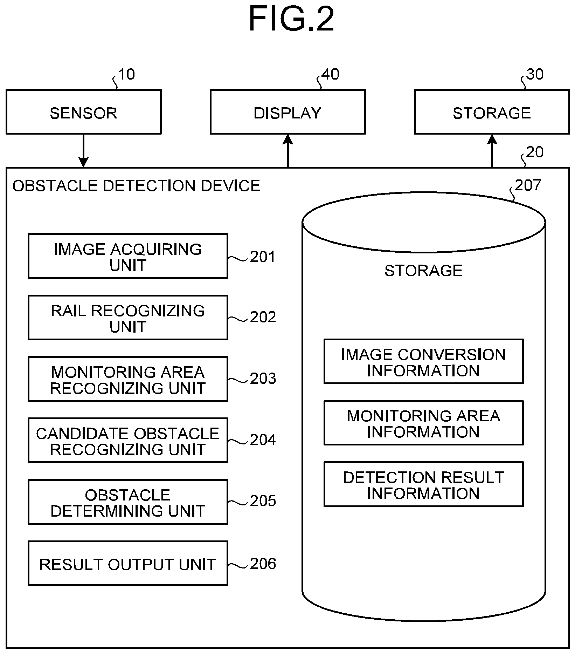

FIG. 2 is a block diagram illustrating an example of a functional configuration of the obstacle detection device included in the railway vehicle according to the first embodiment. As illustrated in FIG. 2, the obstacle detection device 20 includes an image acquiring unit 201, a rail recognizing unit 202, a monitoring area recognizing unit 203, a candidate obstacle recognizing unit 204, an obstacle determining unit 205, a result output unit 206, and a storage 207. In the present embodiment, a part of or all of the image acquiring unit 201, the rail recognizing unit 202, the monitoring area recognizing unit 203, the candidate obstacle recognizing unit 204, the obstacle determining unit 205, and the result output unit 206 are achieved by causing a processor such as a central processing unit (CPU) included in the railway vehicle RV to execute software stored in the storage 207.
In addition, the part of or all of the image acquiring unit 201, the rail recognizing unit 202, the monitoring area recognizing unit 203, the candidate obstacle recognizing unit 204, the obstacle determining unit 205, and the result output unit 206 may be achieved by hardware that is a circuit board such as large scale integration (LSI), an application specific integrated circuit (ASIC), or a field programmable gate array (FPGA). Alternatively, the image acquiring unit 201, the rail recognizing unit 202, the monitoring area recognizing unit 203, the candidate obstacle recognizing unit 204, the obstacle determining unit 205, and the result output unit 206 may be achieved by causing the software executed by the processor and the hardware to collaborate with each other.

The storage 207 includes a nonvolatile storage medium such as a read only memory (ROM), a flash memory, a hard disk drive (HDD), or an SD card, and a volatile storage medium such as a random access memory (RAM) or a register. The storage 207 stores various types of information such as a computer program to be executed by the processor included in the railway vehicle RV.

The image acquiring unit 201 is an example of an acquiring unit that acquires a visible light image (hereinafter referred to as color image) obtained by imaging in the traveling direction of the railway vehicle RV by the sensor 10 and a distance image for identifying a distance to an object existing in the imaging range of the sensor 10. In the present embodiment, the image acquiring unit 201 acquires, as the color image, any one of a plurality of images obtained by imaging in the traveling direction of the railway vehicle RV by a plurality of imaging units included in the sensor 10 from different points of view.

In addition, the image acquiring unit 201 acquires the images as the distance image. In the present embodiment, the image acquiring unit 201 converts the images obtained by the imaging by the imaging units included in the sensor 10 into gray-scaled images (hereinafter referred to as grayscale images). Then, the image acquiring unit 201 geometrically converts the grayscale images into images (hereinafter referred to as parallel coordinate images) obtained when optical axes of the imaging units are virtually parallel to each other. Then, the image acquiring unit 201 uses, in accordance with the principles of parallel stereo vision, one of the parallel coordinate images and the other of the parallel coordinate images to acquire the distance image for identifying the distance to the object existing in the imaging range of the imaging units included in the sensor 10.

The rail recognizing unit 202 functions as an example of a rail detector that detects the rail R that is in the color image and on which the railway vehicle RV travels. In the present embodiment, the rail recognizing unit 202 converts each of the grayscale images converted from the color images obtained by the imaging by the sensor 10 into an image (hereinafter referred to as edge-highlighted image) with edges highlighted. Then, the rail recognizing unit 202 generates pixel groups by grouping certain pixels that are in the edge-highlighted image and have certain edge intensities larger than a predetermined edge intensity and pixels that are in pixels around the certain pixels and have edge intensities equal to or nearly equal to the certain edge intensities. Then, the rail recognizing unit 202 extracts, from the generated pixel groups, pixel groups forming continuous lines extending in the traveling direction of the railway vehicle RV. Then, the rail recognizing unit 202 detects, from among the extracted pixel groups, pixel groups satisfying a predetermined evaluation condition as the rail R on which the railway vehicle RV travels. The evaluation condition is that pixel groups are determined to be the rail R, for example, the pixel groups having edge intensities determined to be the rail R.

The monitoring area recognizing unit 203 functions as an example of a monitoring region setting unit that sets a three-dimensional monitoring region in the color image using the rail R detected by the rail recognizing unit 202 as a standard. The monitoring region is a three-dimensional region defined by a loading gauge of the railway vehicle RV or a construction gauge in the color image. In addition, the monitoring area recognizing unit 203 calculates, based on the color image, range information for identifying a range that is a distance range from the sensor 10 to the monitoring region.

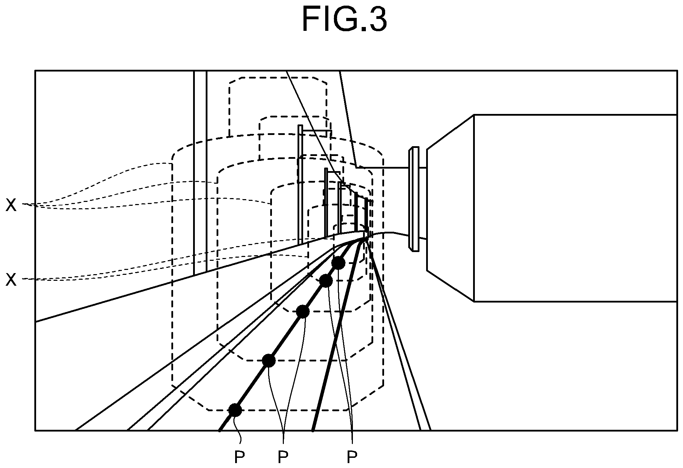

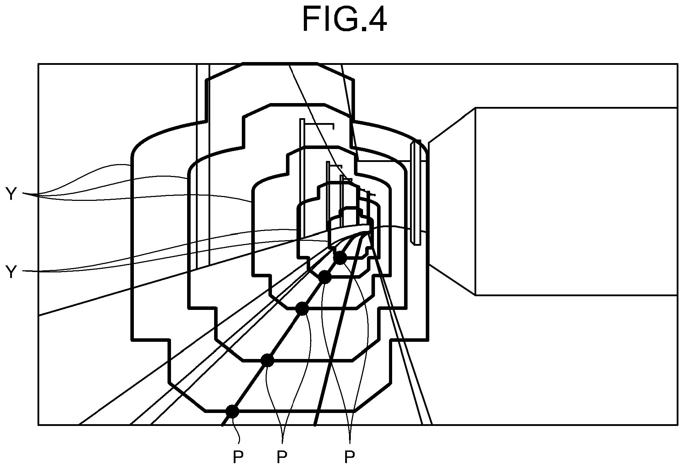

FIGS. 3 and 4 are diagrams illustrating examples of the monitoring region set for the railway vehicle according to the first embodiment. As illustrated in FIG. 3, the monitoring area recognizing unit 203 calculates loading gauge cross-sections X and distances to the loading gauge cross-sections X for arbitrary positions P on the detected rail R based on installation conditions of the sensor 10 and restrictions including a condition that a width of the rail R detected by the rail recognizing unit 202 is constant. Each of the loading gauge cross-sections X is a cross-section of the loading gauge in a direction perpendicular to the traveling direction of the railway vehicle RV. The monitoring area recognizing unit 203 sets, as the monitoring region, a tunnel-shaped region with cross-sections that are the loading gauge cross-sections X calculated for the different positions P on the rail R in the traveling direction of the railway vehicle RV. In addition, the monitoring area recognizing unit 203 calculates, as range information, a range that is a range (set) of distances to the loading gauge cross-sections X calculated for the positions P.

In addition, as illustrated in FIG. 4, the monitoring area recognizing unit 203 calculates construction cross-sections Y and distances to the construction gauge cross-sections Y for arbitrary positions P on the detected rail R based on the installation conditions of the sensor 10 and restrictions including the condition that the width of the rail R detected by the rail recognizing unit 202 is constant. Each of the construction gauge cross-sections Y is a cross-section of the construction gauge in the direction perpendicular to the traveling direction of the railway vehicle RV. The monitoring area recognizing unit 203 sets, as the monitoring region, a tunnel-shaped region with cross-sections that are the construction gauge cross-sections Y calculated for the different positions P on the rail R in the traveling direction of the railway vehicle RV. In addition, the monitoring area recognizing unit 203 calculates, as range information, a range that is a range (set) of distances to the construction gauge cross-sections Y calculated for the positions P.

Returning to FIG. 2, the candidate obstacle recognizing unit 204 extracts, as candidates (hereinafter referred to as candidate obstacles) of an obstacle, objects in the monitoring region based on the distance image and the range information. In the present embodiment, the candidate obstacle recognizing unit 204 extracts, as a three-dimensional candidate obstacle existing in the monitoring region, a similar region obtained by grouping pixels from among pixels within the distance image and indicating distances matching the distances identified by the range information.

The obstacle determining unit 205 detects an obstacle from the candidate obstacles based on at least one of sizes of the candidate obstacles extracted by the candidate obstacle recognizing unit 204 and moving vectors of the candidate obstacles. Therefore, because it is possible to detect, as an obstacle, an object that is likely to be an obstacle from among objects existing in the monitoring region, the accuracy of detecting the obstacle can be improved. In the present embodiment, the obstacle determining unit 205 detects, as an obstacle, a candidate obstacle that is among the candidate obstacles and has a size equal to or larger than a size set in advance. In addition, the obstacle determining unit 205 detects, as an obstacle, a candidate obstacle that is among the candidate obstacles and has a moving vector pointing toward the rail R. In addition, the obstacle determining unit 205 may detect, as an obstacle, a candidate obstacle that is among the candidate obstacles and has a size equal to or larger than the size set in advance and a moving vector pointing toward the rail R.

In the present embodiment, the candidate obstacle recognizing unit 204 and the obstacle determining unit 205 collaborate with each other to function as an example of an obstacle detector that detects, based on the distance image and the range information, an obstacle that is in the monitoring region and hinders the traveling of the railway vehicle RV. Therefore, when the color image obtained by the imaging in the traveling direction of the railway vehicle RV is used to detect an obstacle that hinders the traveling of the railway vehicle RV, it is possible to dynamically and approximately set the monitoring region from which the obstacle is detected in the color image and to detect the obstacle, and thus the obstacle that hinders the traveling of the railway vehicle RV can be detected with high accuracy.

The result output unit 206 functions as an example of an output unit that outputs a result of detecting an obstacle by the candidate obstacle recognizing unit 204 and the obstacle determining unit 205. In the present embodiment, when an obstacle is detected by the obstacle determining unit 205, the result output unit 206 causes the display 40 to display the color image and information indicating that the obstacle has been detected. In addition, the result output unit 206 stores the result of detecting the obstacle in the storage 30.

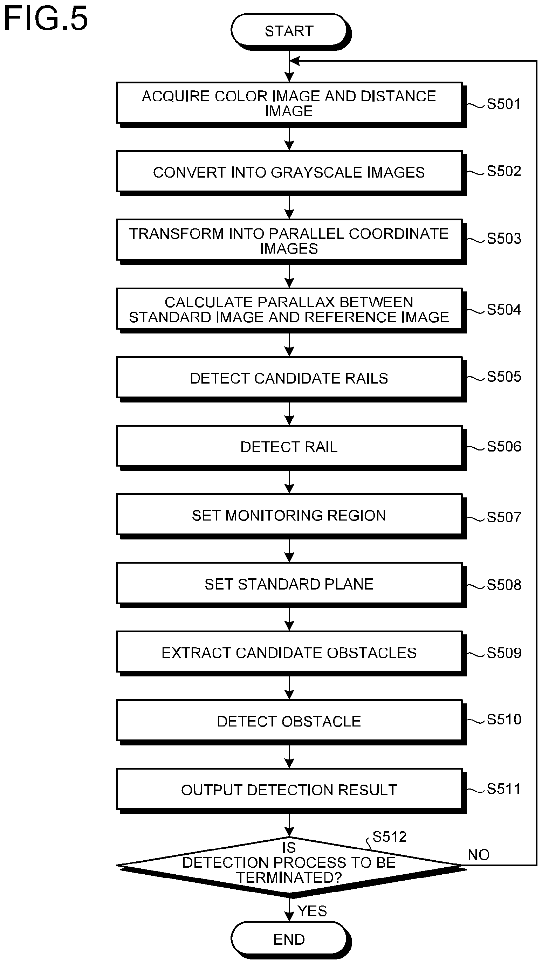

Next, an example of a process of detecting an obstacle by the railway vehicle according to the present embodiment is described with reference to FIG. 5. FIG. 5 is a flowchart indicating the example of the process of detecting an obstacle in the railway vehicle according to the first embodiment.

The image acquiring unit 201 acquires the color image and the distance image from the sensor 10 (in step S501). The sensor 10 is an optical sensor that can simultaneously output the color image and the distance image and is an optical sensor of pattern projection type, photogrammetry type, or time-of-flight type. In addition, when the sensor 10 includes two imaging units (left and right imaging units) separated from each other in a vehicle width direction of the railway vehicle RV, the image acquiring unit 201 may acquire, as the distance image, two color images obtained by imaging by the two imaging units.

Upon acquiring the two color images, as the distance image, the image acquiring unit 201 converts the two color images into grayscale images (in step S502). The present embodiment describes an example in which the image acquiring unit 201 converts the two color images into the grayscale images to reduce a calculation amount necessary to detect an obstacle and uses the grayscale images to detect the obstacle. The obstacle, however, can be detected using the color images as they are.

Next, the image acquiring unit 201 geometrically transforms the two grayscale images into parallel coordinate images (in step S503). A general camera lens has a distortion in a radial direction and a distortion in a circumferential direction. Therefore, a coefficient and/or a table that are necessary to correct distortions of images obtained by imaging by the sensor 10 is stored, as image conversion information, in the storage 207. Then, the image acquiring unit 201 can use the image conversion information stored in the storage 207 to correct distortions of the grayscale images based on aberration of lenses or the like. In addition, an internal parameter of the sensor 10 and an external parameter based on relative positional relations may be calculated by calibration, and the external parameter may be stored as the image conversion information in the storage 207.

Next, the image acquiring unit 201 uses one of the parallel coordinate images as a standard image and the other of the parallel coordinate images as a reference image to calculate disparity between the standard image and the reference image as the distance image (in step S504). According to a geometrical restrictions such as epipolar geometry, a corresponding pixel in the reference image, corresponding to a target pixel in the standard image, is calculated by searching only an epipolar line at the same height position as that of the target pixel of the standard image. Therefore, the corresponding pixel can be searched with a small calculation amount and with high accuracy. The search of the corresponding pixel is executed by template matching, global matching, semi-global matching, or the like. In the template matching, the corresponding pixel is searched from each of small regions that are some regions within the reference image. In the global matching, the optimal corresponding pixel (solution) is searched from the entire reference image. In the semi-global matching, the optimal corresponding pixel is searched from pixels around the target pixel in the reference image. However, when the real time search is requested for the corresponding pixel, the corresponding pixel is searched by the template matching in many cases.

After the calculation of the corresponding pixel, the image acquiring unit 201 calculates the disparity between the target pixel of the standard image and the corresponding pixel of the reference image. In the present embodiment, the image acquiring unit 201 calculates the corresponding pixel of the reference image while shifting the target pixel of the standard image one by one. Therefore, when the reference image is a digital image, coordinates of the corresponding pixel are represented by integers. Therefore, when the coordinates of the corresponding pixel are estimated with decimal precision, a subpixel estimation method is used. In the subpixel estimation method, when an evaluation function to be used to search for the corresponding pixel is a primary function such as the sum of absolute difference (SAD), equiangular linear fitting is used. In the subpixel estimation method, when the evaluation function to be used to search for the corresponding pixel is a secondary function such as the sum of squared difference (SSD), parabola fitting is used.

When it is not necessary to calculate the disparity with decimal precision or when a processing time for acquiring the disparity is to be reduced, the disparity may be calculated without using the subpixel estimation method. In addition, when an evaluation value of the coordinates of the corresponding pixel that is based on the evaluation function used in the subpixel estimation method is larger than a predetermined threshold, and a difference between characteristic amounts (for example, changes in gradations) of the target pixel and the corresponding pixel is small, the calculated disparity may be invalidated.

By executing the foregoing processes, the image acquiring unit 201 calculates disparity between pixels of the reference image and all pixels of the standard image or pixels in a valid region of a part of the standard image. Then, the image acquiring unit 201 uses the following Equation (1) to calculate, as the distance image, a distance Z to an object indicated by pixels of the standard image. In the following Equation (1), f indicates a focal distance of the two imaging units included in the sensor 10, B indicates a distance between the two imaging units included in the sensor 10, and D indicates disparity D between a pixel of the standard image and a pixel of the reference image.

$$Z = f \times B / D \qquad\qquad (1)$$

Next, the rail recognizing unit 202 detects candidate rails that are candidates of the rail R on which the railway vehicle RV travels (in step S505). In the present embodiment, the rail recognizing unit 202 converts the standard image into an edge-highlighted image. Next, the rail recognizing unit 202 detects, as the candidate rails, pixel groups forming continuous lines extending in the traveling direction of the railway vehicle RV from pixel groups obtained by grouping certain pixels having certain edge intensities larger than the predetermined edge intensity and pixels existing around the certain pixels and having edge intensities equal to or nearly equal to the certain edge intensities in the edge-highlighted image. Then, the rail recognizing unit 202 detects, as the rail R, a candidate rail satisfying the evaluation condition set in advance from the detected candidate rails (in step S506).

The monitoring area recognizing unit 203 uses the rail R detected by the rail recognizing unit 202 as a standard and sets a three-dimensional monitoring region in the standard image (in step S507).

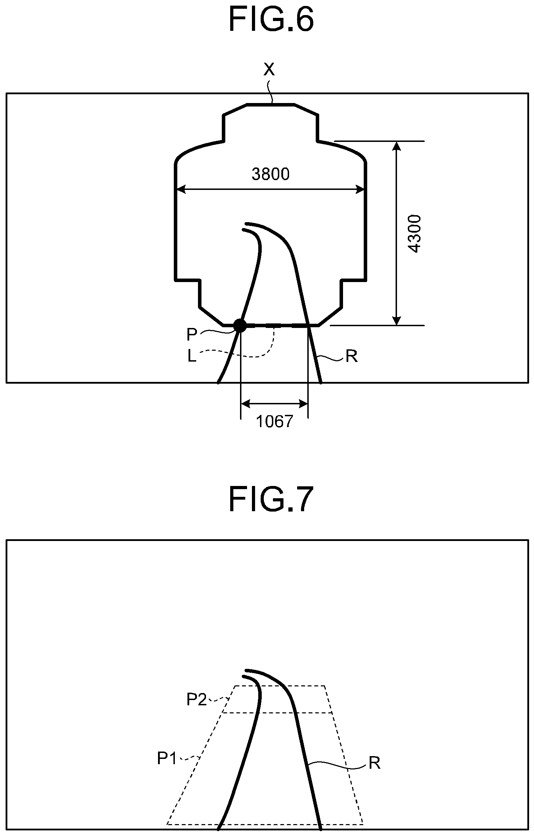

FIG. 6 is a schematic diagram illustrating an example of a method for setting the monitoring region in the railway vehicle according to the first embodiment. As illustrated in FIG. 6, the monitoring area recognizing unit 203 sets, for any arbitrary position P on the rail R detected by the rail recognizing unit 202, a horizontal line connecting left and right segments of the rail R and existing at the position P. The line has a length of L pixels in the standard image. Then, when pitch angles, yaw angles, and roll angles of the imaging units included in the sensor 10 are all 0°, and the rail R on which the railway vehicle RV travels has a narrow gauge, resolution per pixel in the horizontal direction is 1067/L millimeters.

Alternatively, the monitoring area recognizing unit 203 uses the distance image to acquire disparity between a target pixel at the position P and a corresponding pixel or a distance to the position P. Then, the monitoring area recognizing unit 203 calculates resolution per pixel based on the disparity or the distance in advance and identifies resolution per pixel based on the acquired disparity or the acquired distance. Then, the monitoring area recognizing unit 203 may treat the identified resolution per pixel as resolution per pixel in the horizontal direction at the position P. When aspect ratios of imaging elements of the sensor 10 are 1:1, resolution per pixel in a direction (or vertical direction) perpendicular to the line is the same as the resolution per pixel in the horizontal direction.

Next, as illustrated in FIG. 6, the monitoring area recognizing unit 203 sets a loading gauge cross-section X for each of the positions P within the standard image based on dimensions (for example, a width: 3800 mm, a height: 4300 mm) of the loading gauge in the actual space and the resolution per pixel in the standard image. In the present embodiment, the monitoring area recognizing unit 203 sets a region imitating a cross-section of the loading gauge as the loading gauge cross-section X, but is not limited to this as long as a region that allows the loading gauge to be identifiable is set as the loading gauge cross-section X. For example, the monitoring area recognizing unit 203 may set, as the loading gauge cross-section X, a region of a predetermined shape, such as a rectangle approximating the cross-section of the loading gauge. In addition, although an example in which the loading gauge cross-section X is set in the standard image is described, the same applies to the case where a construction gauge cross-section Y is set in the standard image. After that, the monitoring area recognizing unit 203 sets a tunnel-shaped monitoring region in the standard image by repeatedly setting the loading gauge cross-section X for each of the positions P while moving the positions P within the standard image in the traveling direction of the railway vehicle RV.

In addition, the monitoring area recognizing unit 203 calculates, for each of the positions P, a distance to the position P or the disparity between a target pixel at the position P and a corresponding pixel based on the resolution per pixel in the standard image, the number of pixels in a range from a lower end (or an end on the near side in the imaging range of the sensor 10) of the standard image to the position P, and the like. Then, the monitoring area recognizing unit 203 treats, as range information, a range of distances calculated for the positions P or a range of disparity calculated for the positions P. In addition, the monitoring area recognizing unit 203 stores the range information, as monitoring area information, in the storage 207.

Returning to FIG. 5, the candidate obstacle recognizing unit 204 sets, in the standard image, a standard plane in contact with an upper surface of the rail R detected by the rail recognizing unit 202 (in step S508). Therefore, an object that exists under the rail R and is unlikely to be an obstacle is not detected as a candidate obstacle, and thus a processing load caused by the process of detecting an obstacle can be reduced.

FIG. 7 is a diagram illustrating an example of a process of setting the standard plane for the railway vehicle according to the first embodiment. As illustrated in FIG. 7, the candidate obstacle recognizing unit 204 sets, as standard planes P1 and P2, approximate flat or curved planes along a part of the upper surface of the rail R recognized by the rail recognizing unit 202 and the part of the upper surface is in an area close to the sensor 10 or an area with similar disparity.

Returning to FIG. 5, next, the candidate obstacle recognizing unit 204 extracts, as candidate obstacles, objects in the monitoring region of the standard image based on the distance image indicating the disparity (or distance) between the standard image and the reference image, and the range information (in step S509). Specifically, as candidate obstacles, the candidate obstacle recognizing unit 204 extracts objects, from the objects in the standard image, having a disparity between the standard image and the reference image or a distance within the range indicated in the range information.

Among the objects in the monitoring region, any object partially included in the monitoring region may not be detected as an obstacle for such a reason that the size of the object is smaller than a predetermined size, or the like. Therefore, in the present embodiment, the candidate obstacle recognizing unit 204 extracts, as a candidate obstacle, an object existing above the standard plane. Specifically, among the objects in the monitoring region of the standard image, the candidate obstacle recognizing unit 204 extracts, as a candidate obstacle, an object residing on the near side with respect to the standard plane, or an object closer the sensor 10 than the standard plane (or an object having larger disparity than disparity of the standards plane).

The obstacle determining unit 205 detects an obstacle from among the candidate obstacles based on at least one of sizes of the candidate obstacles and moving vectors of the candidate obstacles (in step S510). In the present embodiment, the obstacle determining unit 205 discards, as noise or disturbance, any candidate obstacle, among the candidate obstacles, having an aspect ratio of a circumscribed rectangle that is extremely biased in the standard image. In addition, the obstacle determining unit 205 calculates a moving vector of a candidate obstacle between standard images of two or more frames among the candidate obstacles. When the moving vector points from the lower side to the upper side, the obstacle determining unit 205 discards the obstacle as disturbance such as a bird or smoke. Then, the obstacle determining unit 205 detects, as an obstacle, a candidate obstacle that is among the candidate obstacles and remains without being discarded and has the center of gravity the position of which is in the monitoring region.

Then, the result output unit 206 outputs, to the display 40, a result of detecting the obstacle by the obstacle determining unit 205 and causes the display 40 to display the result of detecting the obstacle (in step S511). In the present embodiment, the result output unit 206 causes the display 40 to display, as the result of detecting the obstacle, the fact that the obstacle has been detected by the obstacle determining unit 205, a distance to the detected obstacle, and the like. In addition, the result output unit 206 outputs audio notifying the result of detecting the obstacle and outputs the result of detecting the obstacle to a vehicle control device for controlling the traveling of the railway vehicle RV. Furthermore, the result output unit 206 stores detection result information indicating the result of detecting the obstacle in the storage 207. Furthermore, the result output unit 206 can store the detection result information in an external storage. Therefore, even in an offline state where an external device cannot communicate with the obstacle detection device 20 of the railway vehicle RV, the external device can use the detection result information stored in the external storage to analyze the result of detecting the obstacle.

After that, the image acquiring unit 201 determines whether the termination of the process of detecting an obstacle is instructed (in step S512). When the termination of the process of detecting an obstacle is instructed (Yes at step S512), the image acquiring unit 201 does not acquire a new color image and a distance image and terminates the process of detecting an obstacle. In contrast, when the termination of the process of detecting an obstacle has not been instructed (No at step S512), the image acquiring unit 201 returns to step S501 and acquires the new color image and the distance image.

According to the railway vehicle RV of the first embodiment, when the color image obtained by the imaging in the traveling direction of the railway vehicle RV is used to detect an obstacle that hinders the traveling of the railway vehicle RV, it is possible to dynamically and appropriately set the monitoring region from which the obstacle is detected in the color image and detect the obstacle. Therefore, the obstacle that hinders the traveling of the railway vehicle RV can be detected with high accuracy.

(Modification)

A modification is an example in which when a plurality of rails are detected from a color image, a monitoring region is set for each of the rails using the rails as standards. The following describes different features from the first embodiment.

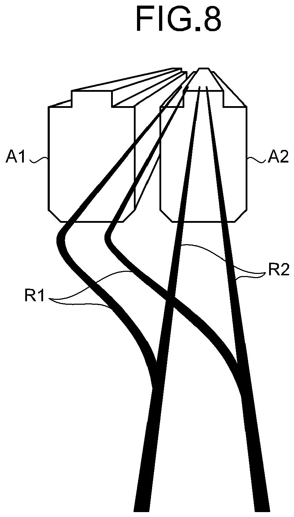

FIG. 8 is a diagram illustrating an example of a process of setting a monitoring region for a railway vehicle according to the modification. As illustrated in FIG. 8, when a plurality of rails R1 and R2 are detected by the rail recognizing unit 202, the monitoring area recognizing unit 203 sets monitoring regions A1 and A2 for the rails R1 and R2.

However, when the rail R1 on which the railway vehicle RV travels is identifiable by the rail recognizing unit 202 from the rails R1 and R2, the monitoring area recognizing unit 203 may set a monitoring region (for example, the monitoring region A1) only for the rail R1. Therefore, when the rails R are detected by the rail recognizing unit 202, it is sufficient if a monitoring region is set for any one of the rails R, and thus a processing load caused by the process of setting a monitoring region can be reduced. For example, the monitoring area recognizing unit 203 recognizes, from an image, the orientation of the rail R at a point portion on the rail R on which the railway vehicle RV travels and current indication of a traffic light. Then, the monitoring area recognizing unit 203 identifies, based on the results of the recognition, the rail R on which the railway vehicle RV travels. Alternatively, the monitoring area recognizing unit 203 may identify, based on a service schedule of the railway vehicle RV, the rail R on which the railway vehicle RV travels.

(Second Embodiment)

A present embodiment is an example in which a monitoring region is enlarged in a predetermined section in a traveling section in which a railway vehicle travels. In the following description, a description of the same configurations as those described in the first embodiment is omitted.

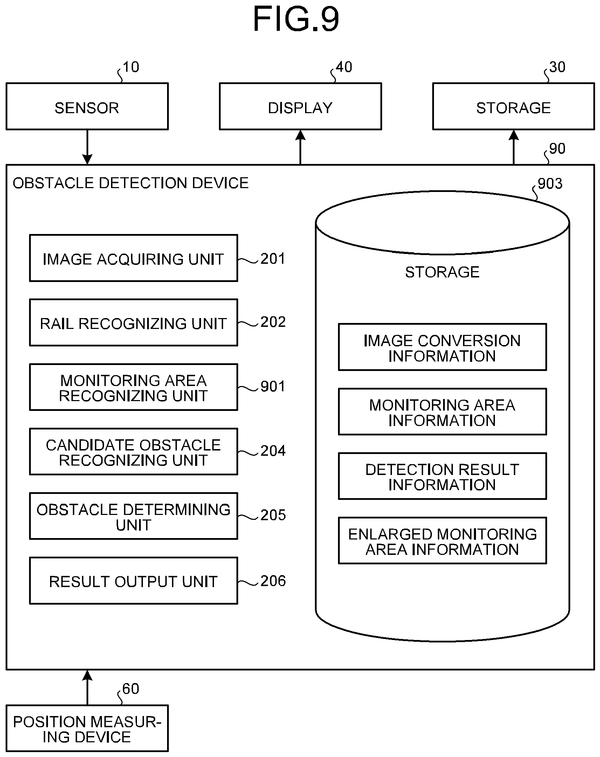

FIG. 9 is a diagram illustrating an example of a functional configuration of a traveling obstacle detection device included in a railway vehicle according to the second embodiment. As illustrated in FIG. 9, in the present embodiment, the railway vehicle RV includes the sensor 10, an obstacle detection device 90, the display 40, the storage 30, and a position measuring device 60. The position measuring device 60 is a position measuring unit that measures a traveling position of the railway vehicle RV. For the position measuring device 60, a tachometer generator (TG) and a global navigation satellite system (GNSS) are used. The obstacle detection device 90 includes the image acquiring unit 201, the rail recognizing unit 202, a monitoring area recognizing unit 901, the candidate obstacle recognizing unit 204, the obstacle determining unit 205, the result output unit 206, and a storage 903.

For example, objects existing in not only a loading gauge and a construction gauge but also regions around the loading gauge and the construction gauge may be obstacles at a railway crossing gate where pedestrians, bicycles, vehicles, and the like come and go on a rail and may hinder the traveling of the railway vehicle RV, a station platform from which a passenger, baggage, or the like falls and may hinder the traveling of the railway vehicle RV on the rail R, and the like.

Therefore, the monitoring area recognizing unit 901 enlarges a monitoring region within a standard image so that a region around the loading gauge or the construction gauge can be included in the monitoring region in the predetermined section in the traveling section of the railway vehicle RV. The predetermined section is a section that is preset and can be an obstacle in a region around the loading gauge or the construction gauge. Therefore, because it is possible to detect, as an obstacle, an object that can be an obstacle in the region around the loading gauge or the construction gauge, a state around the railway vehicle RV can be recognized. Consequently, it is possible to reduce the risk that an object enters the loading gauge or the construction gauge after the railway vehicle RV approaches a railway crossing gate, a station platform, or the like, and is bumped by the railway vehicle RV.

Therefore, in the present embodiment, it is necessary that the monitoring area recognizing unit 901 determine whether the monitoring region in the standard image is set in the predetermined section. For example, the monitoring area recognizing unit 901 determines, based on a color image, whether a region in which the monitoring region is set is in the predetermined section. Specifically, when a symbol such as a station platform, a railway crossing gate, a sign, or a traffic light exists in the predetermined section, the monitoring area recognizing unit 901 detects the symbol from the color image by a pattern recognition technique or the like, thereby identifying a start point of the predetermined section and an end point of the predetermined section. Then, the monitoring area recognizing unit 901 enlarges the monitoring region between the identified start point and the identified end point.

Alternatively, the monitoring area recognizing unit 901 may detect, as the symbol, a structural object (for example, an end of a station platform or a structure specific to a railway crossing gate) around the predetermined section and identify the start and end points of the predetermined section. Alternatively, a dedicated sign from which the start and end points of the predetermined section is identifiable may be installed at a position that is on the ground side and can be imaged by the sensor 10. Then, when the monitoring area recognizing unit 901 recognizes the dedicated sign from the color image by the pattern recognition technique, the monitoring area recognizing unit 901 may determine that the region in which the monitoring region is set is the predetermined section, and enlarge the monitoring region.

In addition, a communication device (example of an external device) that can execute wireless communication to transmit, to the railway vehicle RV traveling near the predetermined section, positional information indicating a position (for example, the start and end points of the predetermined section) of the predetermined section may be installed on the ground side. In this case, the monitoring area recognizing unit 901 receives the positional information from the communication device. Then, the monitoring area recognizing unit 901 enlarges the monitoring region at the position indicated in the received positional information. The communication device is a transponder ground coil, a radio frequency identifier (RFID) tag, or the like. However, because it is necessary to detect an obstacle 200 to 300 meters before the obstacle, it is necessary that the communication device be installed several hundreds of meters before the predetermined section and transmit the positional information to the railway vehicle RV located several hundreds of meters away from the communication device.

In addition, when the railway vehicle RV includes the position measuring device 60 and the storage 903 stores the positional information (for example, enlarged monitoring area information indicating the start and end points of the predetermined section) of the predetermined section, the monitoring area recognizing unit 901 may enlarge the monitoring region in the case where a traveling position measured by the position measuring device 60 is between the start and end points indicated in the enlarged monitoring area information stored in the storage 903. The enlarged monitoring area information is information representing the start and end positions of the predetermined section in a unit system (for example, kilometers, or longitude and latitude) or the like.

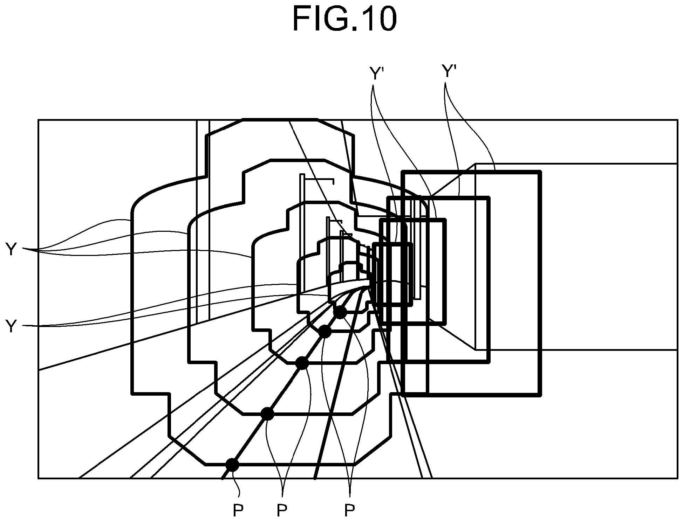

FIG. 10 is a diagram illustrating an example of the enlarged monitoring region for the railway vehicle according to the second embodiment. As illustrated in FIG. 10, when the monitoring area recognizing unit 901 determines that the region in which the monitoring region is set is in the predetermined section, the monitoring area recognizing unit 901 sets the construction gauge cross-sections Y and surrounding regions Y' surrounding the construction gauge cross-sections Y for the set positions P. Then, the monitoring area recognizing unit 901 sets, as the monitoring region, a tunnel-shaped region having cross-sections that are the construction gauge cross-sections Y calculated for the different positions P and the surrounding regions Y' calculated for the different positions P. The example in which the construction gauge cross-sections Y and the surrounding regions Y' are set in the color image is described. However, also in the case where the loading gauge cross-sections X and surrounding regions are set in the color image, the monitoring region is set in the same manner.

According to the railway vehicle RV of the second embodiment, because it is possible to detect, as an obstacle, an object that can be an obstacle in a region around the loading gauge or the construction gauge, a state around the railway vehicle RV can be recognized. Consequently, it is possible to reduce the risk that the object enters the loading gauge or the construction gauge after the railway vehicle RV approaches a railway crossing gate, a station platform, or the like and is bumped by the railway vehicle RV.

As described above, according to the first and the second embodiments, an obstacle that hinders the traveling of the railway vehicle RV can be detected with high accuracy.

A computer program to be executed by the obstacle detection device 20, 90 according to the present embodiment is provided by being embedded in a ROM or the like, but may be provided by being recorded as a file in an installable format or an executable format in a computer-readable recording medium. The computer-readable recording medium is a CD-ROM, a flexible disk (FD), a CD-R, a digital versatile disk (DVD), or the like.

The computer program to be executed by the obstacle detection device 20, 90 according to the present embodiment may be stored in a computer connected to a network such as the Internet and may be downloaded and provided via the Internet. In addition, the computer program to be executed by the obstacle detection device 20, 90 according to the present embodiment may be provided or distributed via the network such as the Internet.

The computer program to be executed by the obstacle detection device 20, 90 according to the present embodiment has a module configuration including the foregoing units (image acquiring unit 201, rail recognizing unit 202, monitoring area recognizing unit 203, 901, candidate obstacle recognizing unit 204, obstacle determining unit 205, and result output unit 206). The CPU as actual hardware reads the computer program from the foregoing ROM and executes the computer program, thereby causing the foregoing units to be loaded into the main storage so that the image acquiring unit 201, the rail recognizing unit 202, the monitoring area recognizing unit 203, 901, the candidate obstacle recognizing unit 204, the obstacle determining unit 205, and the result output unit 206 can be generated on the main storage.

Although the embodiments of the invention are described, these embodiments are presented as examples and are not intended to limit the scope of the invention. It is possible to implement the new embodiments in other various forms and conduct various omission, replacement, and changes without departing from the gist of the invention. The embodiments and the modifications thereof are included in the scope and gist of the invention and included in the scope of the invention described in the claims and the scope of equivalents thereof.

**Claims**

1. An obstacle detection device comprising:

    an acquiring unit that acquires a visible light image obtained by imaging in a traveling direction of a railway vehicle by an imaging unit included in the railway vehicle and a distance image that allows a distance to an object existing in an imaging range of the imaging unit to be identifiable;
    a rail detector that detects, from the visible light image, a rail on which the railway vehicle travels;
    a monitoring region setting unit that uses the rail as a standard to set, in the visible light image, a three-dimensional monitoring region defined by a loading gauge of the railway vehicle or a construction gauge;
    an obstacle detector that detects an obstacle that exists in the monitoring region and hinders the traveling of the railway vehicle, based on range information that allows a distance range to the monitoring region based on the visible light image to be identifiable and the distance image; and
    an output unit that outputs a result of detecting the obstacle.

2. The obstacle detection device according to claim 1, further comprising:

    a candidate detector that detects, as candidates of the obstacle, objects existing in the monitoring region based on the distance image and the range information, wherein
    the obstacle detector detects the obstacle from among the candidates of the obstacle based on at least one of sizes of the candidates of the obstacle and moving vectors of the candidates of the obstacle.

3. The obstacle detection device according to claim 1 or 2, wherein
    the acquiring unit acquires, as the visible light image, any one of a plurality of images obtained by imaging in the traveling direction of the railway vehicle by a plurality of the imaging units from different points of view and acquires the images as the distance image.

4. The obstacle detection device according to claim 3, wherein
    the distance image indicates disparity between the images, and
    the range information indicates a range of disparity of the monitoring region.

5. The obstacle detection device according to any one of claims 1 to 4, wherein
    when a plurality of the rails are detected by the rail detector from the light visible image, the monitoring region setting unit sets the monitoring region for each of the rails.

6. The obstacle detection device according to any one of claims 1 to 4, wherein
    when a plurality of the rails are detected by the rail detector from the light visible image, the monitoring region setting unit sets the monitoring region for only the rail that is among the rails and on which the railway vehicle travels.

7. The obstacle detection device according to claim 2, wherein
    the candidate detector sets a standard plane in contact with an upper surface of the rail in the visible light image and detects, as a candidate of the obstacle, an object existing above the standard plane.

8. The obstacle detection device according to any one of claims 1 to 7, wherein
    the monitoring region setting unit enlarges the monitoring region so that a region around the loading gauge of the railway vehicle or the construction gauge is included in the monitoring region in a predetermined section within a traveling section in which the railway vehicle travels.

9. The obstacle detection device according to claim 8, wherein
    the monitoring region setting unit detects the predetermined section from the visible light image and enlarges the monitoring region in the predetermined section.

10. The obstacle detection device according to claim 8, wherein

the monitoring region setting unit receives, from an external device, positional information indicating a position of the predetermined section and enlarges the monitoring region at the position indicated in the positional information.

11. The obstacle detection device according to claim 8, further comprising:

a position measuring unit that measures a traveling position of the railway vehicle; and
a storage that stores positional information indicating the predetermined section, wherein
the monitoring region setting unit enlarges the monitoring region in the predetermined section based on the traveling position measured by the position measuring unit and the positional information stored in the storage.

# FIG.1

TRAVELING
DIRECTION

40

10

RV

DISPLAY

STORAGE

OBSTACLE
DETECTION DEVICE

30

20

R

# FIG.2

SENSOR ⌐10

DISPLAY ⌐40

STORAGE ⌐30

⌐20

OBSTACLE DETECTION DEVICE

⌐207

STORAGE

IMAGE ACQUIRING UNIT ～201

RAIL RECOGNIZING UNIT ～202

MONITORING AREA RECOGNIZING UNIT ～203

CANDIDATE OBSTACLE RECOGNIZING UNIT ～204

OBSTACLE DETERMINING UNIT ～205

RESULT OUTPUT UNIT ～206

IMAGE CONVERSION INFORMATION

MONITORING AREA INFORMATION

DETECTION RESULT INFORMATION

# FIG.3

# FIG.4

# FIG.5

START

ACQUIRE COLOR IMAGE AND DISTANCE IMAGE — S501

CONVERT INTO GRAYSCALE IMAGES — S502

TRANSFORM INTO PARALLEL COORDINATE IMAGES — S503

CALCULATE PARALLAX BETWEEN STANDARD IMAGE AND REFERENCE IMAGE — S504

DETECT CANDIDATE RAILS — S505

DETECT RAIL — S506

SET MONITORING REGION — S507

SET STANDARD PLANE — S508

EXTRACT CANDIDATE OBSTACLES — S509

DETECT OBSTACLE — S510

OUTPUT DETECTION RESULT — S511

S512
IS DETECTION PROCESS TO BE TERMINATED? — NO

YES

END

# FIG.6

X

3800

4300

P

L

R

1067

# FIG.7

P2

P1

R

# FIG.8

A1

A2

R1

R2

# FIG.9

SENSOR ~10

DISPLAY ~40

STORAGE ~30

OBSTACLE DETECTION DEVICE ~90

IMAGE ACQUIRING UNIT ~201

RAIL RECOGNIZING UNIT ~202

MONITORING AREA RECOGNIZING UNIT ~901

CANDIDATE OBSTACLE RECOGNIZING UNIT ~204

OBSTACLE DETERMINING UNIT ~205

RESULT OUTPUT UNIT ~206

STORAGE ~903

IMAGE CONVERSION INFORMATION

MONITORING AREA INFORMATION

DETECTION RESULT INFORMATION

ENLARGED MONITORING AREA INFORMATION

POSITION MEASUR-ING DEVICE ~60

# FIG.10

## INTERNATIONAL SEARCH REPORT

| International application No. |
|---|
| PCT/JP2018/040899 |

**A. CLASSIFICATION OF SUBJECT MATTER**
Int.Cl. B61L23/00(2006.01)i, G06T7/00(2017.01)i, G06T7/593(2017.01)i
According to International Patent Classification (IPC) or to both national classification and IPC

**B. FIELDS SEARCHED**

Minimum documentation searched (classification system followed by classification symbols)
Int.Cl. B61L23/00, G06T7/00, G06T7/593

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2017-83245 A (MEIDENSHA CORPORATION) 18 May 2017, paragraphs [0029]–[0058], fig. 6-8 (Family: none) | 1, 3<br>4-6<br>2, 7-11 |
| Y | JP 2016-192105 A (RAILWAY TECHNICAL RESEARCH INSTITUTE) 10 November 2016, paragraph [0002] (Family: none) | 4-6 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 January 2019 (17.01.2019) | 29 January 2019 (29.01.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 705 371 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5161673 B
- JP 2016052849 A
- JP 3888055 B
- JP 2016000598 A